# EUROPEAN PATENT APPLICATION

(11) **EP 4 711 236 A1**
(43) Date of publication of application: **18.03.2026**
(21) Application number: 25191170.7
(22) Date of filing: 23.07.2025
(51) Int. Cl.: B62D 5/00, F16H 57/12

(54) **STEERING FEEDBACK ACTUATOR**

(30) Priority: 13.09.2024 KR 20240125760
(71) Applicant: Hyundai Mobis Co., Ltd., Gangnam-gu Seoul 06141 (KR)
(72) Inventor: SON, Chang Wook, 16891 Yongin-si, Gyeonggi-do (KR); JEONG, Jong Hun, 16891 Yongin-si, Gyeonggi-do (KR)
(74) Representative: Jung, Minkyu

(57) **Abstract**

A steering feedback actuator may include a housing part, a steering column part rotatably accommodated in the housing part, a first gear part coupled to the steering column part and rotated along with the steering column part, an electric motor part including a motor housing that is movably coupled to the housing part and that covers an opening of the housing part and a motor shaft that is rotatably coupled to the motor housing and that comprises a second gear part engaged with the first gear part, and a wheelbase variable member coupled to the housing part in a way to be capable of advancing and retreating, coupled to the motor housing in a way to come into contact with the motor housing, and configured to vary a wheelbase between the steering column part and the motor shaft by moving the motor housing.

## Description

### BACKGROUND

### FIELD

Exemplary embodiments of the present disclosure relate to a steering feedback actuator, and more particularly, to a steering feedback actuator which is applied to a steer-by-wire (SBW) system.

### DESCRIPTION OF THE RELATED ART

In general, a power steering system for a vehicle is an oil pressure type steering system which generates oil pressure by using an oil pump that is driven by power of an engine and that generates steering assistive power by the oil pressure. Such an oil pressure type steering system has disadvantages in that the oil pressure type steering system requires multiple parts and has a complex structure. Accordingly, an SBW system that transmits a driver's steering intention to a road wheel in the form of an electrical signal without a mechanical connection between a steering wheel and the road wheel is being researched and developed.

The SBW system includes a steering feedback actuator (SFA) and a road wheel actuator (RWA). When a steering wheel is rotated, an electronic control unit (ECU) of a vehicle receives a steering angle as an electrical signal, and steers a road wheel by driving the RWA based on the electrical signal. The SBW system can improve driving convenience and vehicle safety because a steering ratio can be easily changed based on a driving condition of the vehicle.

A conventional steering feedback actuator includes a reducer and a motor. The reducer includes a worm reducer, a belt type reducer, and a planet gear reducer. Such a reducer has problems in that production costs are high and there is a good possibility that a quality problem may occur because the reducer has a complicated mechanism in view of its structural characteristics. Furthermore, there are problems in that noise according to the gear backlash of the reducer may occur and there is a difficulty in securing backlash setting precision due to a limited reduction of the pitch of a screw thread when wheelbase is adjusted. Accordingly, there is a need to improve such problems.

A background technology of the present disclosure is disclosed in Korean Patent Application Publication No. 10-2023-0013858 (January 27, 2023) entitled "REACTION TORQUE APPARATUS OF STEERING SYSTEM FOR VEHICLE".

### SUMMARY

Various embodiments are directed to a steering feedback actuator capable of adjusting backlash.

In an embodiment, a steering feedback actuator includes a housing part, a steering column part rotatably accommodated in the housing part, a first gear part coupled to the steering column part and rotated along with the steering column part, an electric motor part including a motor housing that is movably coupled to the housing part and that covers an opening of the housing part and a motor shaft that is rotatably coupled to the motor housing and that comprises a second gear part engaged with the first gear part, and a wheelbase variable member coupled to the housing part in a way to be capable of advancing and retreating, coupled to the motor housing in a way to come into contact with the motor housing, and configured to vary a wheelbase between the steering column part and the motor shaft by moving the motor housing.

The central axis of the steering column part may be disposed in a direction parallel to a first axial direction. The central axis of the motor shaft may be disposed in a direction parallel to a second axial direction that does not accord with the first axial direction.

The central axis of the steering column part may be disposed to be spaced apart from the central axis of the motor shaft in a first direction.

The central axis of the wheelbase variable member may be disposed in a direction parallel to a second direction that intersects the first direction at a set angle.

A crossing angle of the second direction with respect to the first direction may be 10 degrees to 90 degrees.

The motor housing may include a housing body part coupled to the motor shaft, a flange part that is coupled to the housing body part and through which the motor shaft passes, and a guide protrusion part that is formed in the flange part in a way to protrude from the guide protrusion part and inserted into the housing part and that is capable of supporting the wheelbase variable member.

The guide protrusion part may be disposed in a plural number in a circumferential direction of the flange part so that the plurality of guide protrusion part is spaced apart from each other.

The housing part may include a moving restriction part depressed and formed in an inner surface of the housing part so that the guide protrusion part is accommodated and configured to limit a movement of the guide protrusion part.

The moving restriction part may be disposed at locations corresponding to the plurality of guide protrusion parts.

The first gear part may include a plastic material or a metal material. The second gear part may include a plastic material.

An embodiment of the present disclosure has an effect in that backlash between the first gear part and the second gear part can be adjusted because the wheelbase between the steering column part that is disposed in the first direction and that includes the first gear part and the motor shaft that includes the second gear part engaged with the first gear part and that is disposed in the first direction and disposed in parallel to the steering column part can be adjusted.

Furthermore, an embodiment of the present disclosure has an effect in that noise that is generated due to backlash between the first gear part and the second gear part can be reduced because the first gear part includes a metal material and the second gear part engaged with the first gear part include a plastic material.

### BRIEF DESCRIPTION OF THE DRAWINGS

FIG. 1 is a perspective view of a steering feedback actuator, which is viewed in one direction, according to an embodiment of the present disclosure.
FIG. 2 is a perspective view of the steering feedback actuator of FIG. 1, which is viewed in another direction.
FIG. 3 is a one-side cross-sectional view schematically illustrating the steering feedback actuator according to an embodiment of the present disclosure.
FIG. 4 is a partially enlarged cross-sectional view schematically illustrating the steering feedback actuator according to an embodiment of the present disclosure.
FIG. 5 is a partially enlarged perspective view schematically illustrating the steering feedback actuator according to an embodiment of the present disclosure.
FIG. 6 is a cross-sectional view schematically illustrating the steering feedback actuator according to an embodiment of the present disclosure.

### DETAILED DESCRIPTION

Hereinafter, a steering feedback actuator according to an embodiment of the present disclosure is described with reference to the accompanying drawings. In this process, the thicknesses of lines or the sizes of components illustrated in the drawings may have been exaggerated for the clarity of a description and for convenience' sake. Terms to be described below have been defined by taking into consideration their functions in the present disclosure, and may be changed depending on a user or operator's intention or practice. Accordingly, such terms should be defined based on the overall contents of this specification.

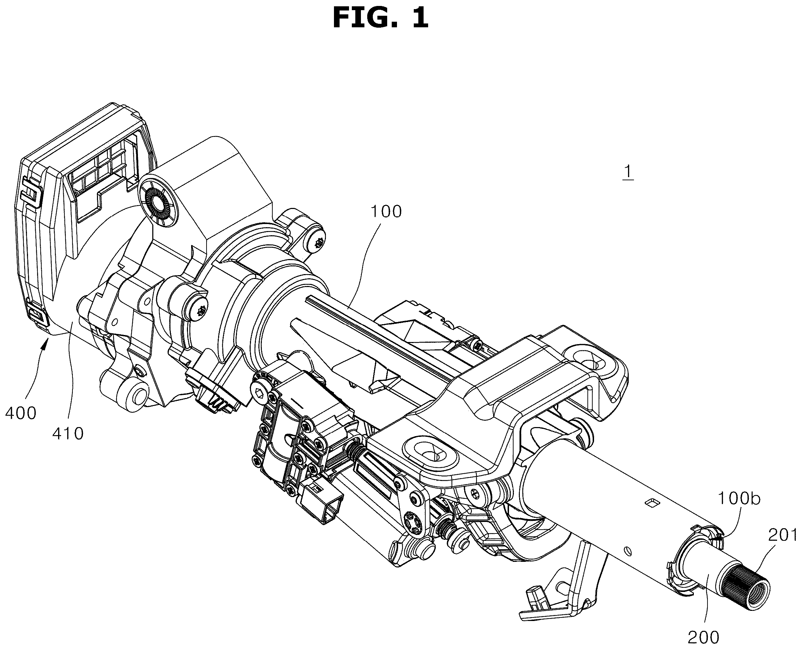

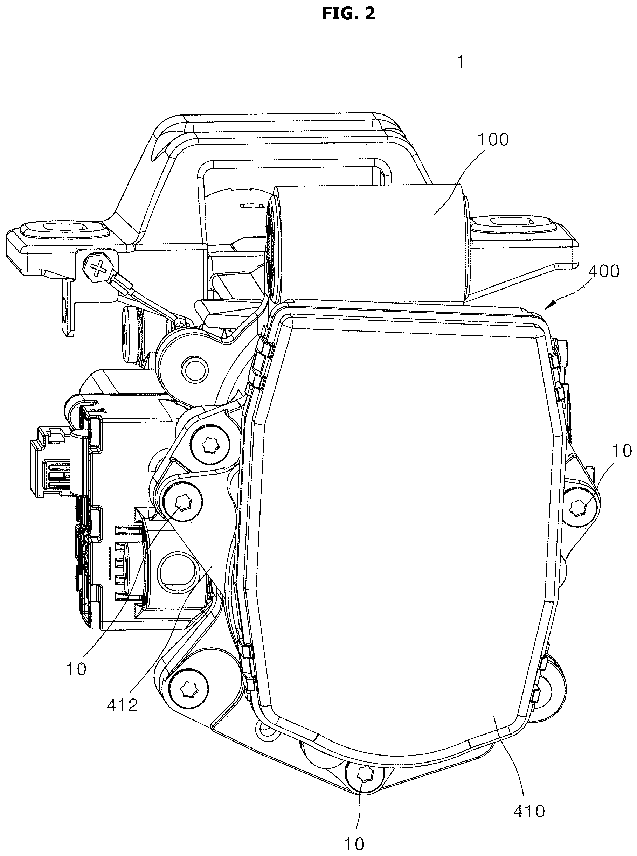

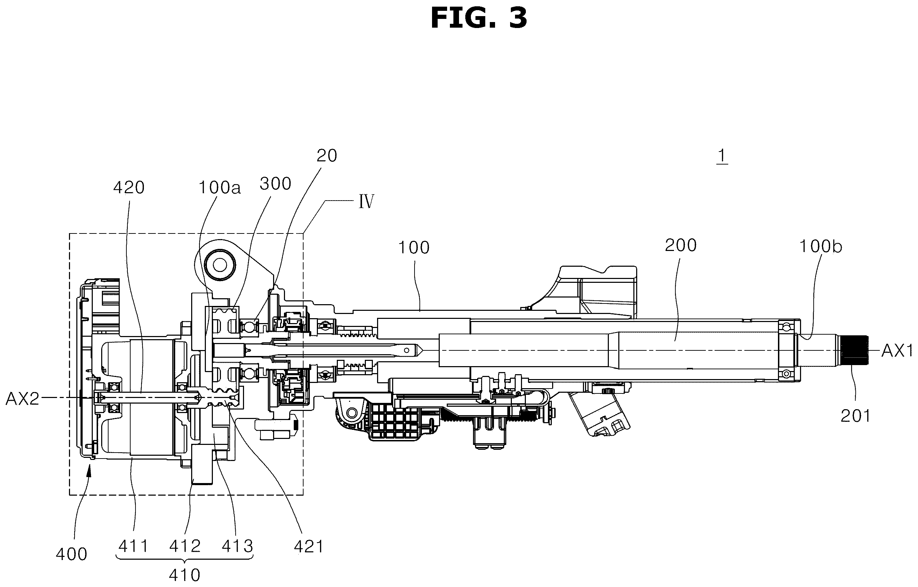

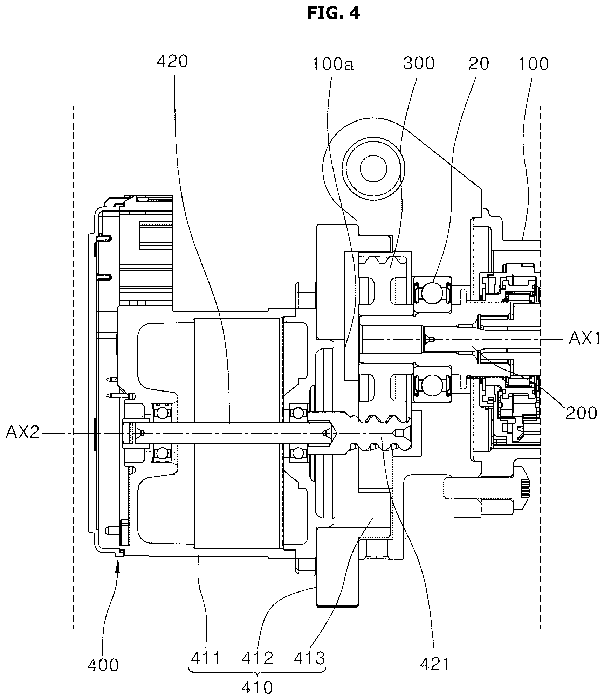

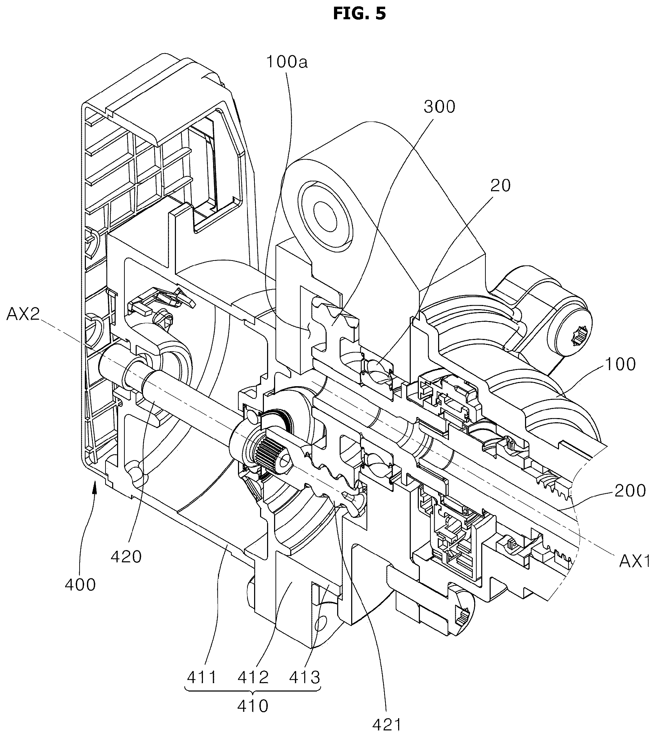

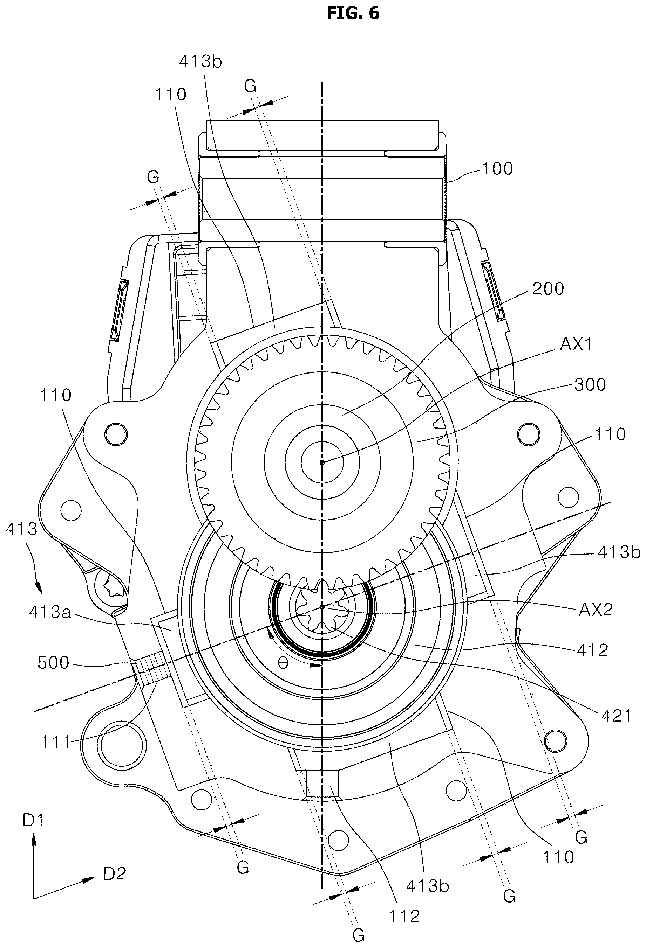

FIG. 1 is a perspective view of a steering feedback actuator, which is viewed in one direction, according to an embodiment of the present disclosure. FIG. 2 is a perspective view of the steering feedback actuator of FIG. 1, which is viewed in another direction. FIG. 3 is a one-side cross-sectional view schematically illustrating the steering feedback actuator according to an embodiment of the present disclosure. FIG. 4 is a partially enlarged cross-sectional view schematically illustrating the steering feedback actuator according to an embodiment of the present disclosure. FIG. 5 is a partially enlarged perspective view schematically illustrating the steering feedback actuator according to an embodiment of the present disclosure. FIG. 6 is a cross-sectional view schematically illustrating the steering feedback actuator according to an embodiment of the present disclosure.

Referring to FIGS. 1 to 6, the steering feedback actuator 1 according to an embodiment of the present disclosure includes a housing part 100, a steering column part 200, a first gear part 300, an electric motor part 400, and a wheelbase variable member 500, which are described in detail as follows.

The housing part 100 may form a rough appearance of the steering feedback actuator 1 according to an embodiment of the present disclosure, and may generally support the steering column part 200, the first gear part 300, the electric motor part 400, and the wheelbase variable member 500.

A detailed shape of the housing part 100 is not limited to the shape illustrated in FIG. 1, and may be variously designed and changed within the technical spirit of a shape capable of generally supporting the components of the steering feedback actuator 1 according to an embodiment of the present disclosure.

The housing part 100 may be formed to have a cylindrical shape with a hollow interior. The steering column part 200 may be accommodated within the housing part 100.

Both sides of the housing part 100 in a length direction thereof may be opened. An opening 100a may be provided on one side (i.e., the left side of FIG. 3) of the housing part 100 in the length direction, which faces the electric motor part 400. The opening 100a may be formed through one side of the housing part 100 in the length direction of the housing part 100.

A through hole 100b may be formed on the other side (i.e., the right side of FIG. 3) of the housing part 100 in the length direction. The through hole 100b may be formed through the other side of the housing part 100 in the length direction of the housing part 100. One side (i.e., the right side of FIG. 3) of the steering column part 200 may be exposed from the housing part 100 through the through hole 100b.

The steering column part 200 may be installed within the housing part 100 in a way to be axially rotated. The steering column part 200 may be disposed in a direction parallel to the length direction of the housing part 100.

The central axis of the steering column part 200 may be disposed in a direction parallel to a first axial direction AX1. The direction of the central axis of the steering column part 200 and the first axial direction AX1 may be disposed on the same axial line.

Accordingly, the first axial direction AX1 may be the same direction as the length direction of the housing part 100. Furthermore, the first axial direction AX1 may be the same direction as the direction of the central axis of the steering column part 200.

A spline 201 may be provided on one side of the steering column part 200, which is exposed through the through hole 100b formed on the other side of the housing part 100 in the length direction thereof. The spline 201 may be formed on the outer circumferential surface of the steering column part 200.

A steering wheel (not illustrated) may be coupled to one side of the steering column part 200 in which the spline 201 is formed. Accordingly, the steering column part 200 may be axially rotated in line with the rotation of the steering wheel.

A bearing 20 that rotatably supports the steering column part 200 may be accommodated within the housing part 100. The bearing 20 may be installed between the housing part 100 and the steering column part 200. The bearing 20 may be disposed in a plural number in the length direction of the housing part 100 so that the plurality of bearings is spaced apart from each other.

The first gear part 300 may be coupled to the steering column part 200. The first gear part 300 may be coupled to the other side (i.e., the other side of FIG. 3) of the steering column part 200, which is directed toward a direction in which the opening 100a formed on one side of the housing part 100 in the length direction thereof is disposed.

The steering column part 200 may be axially coupled to the first gear part 300. The other side of the steering column part 200 may be axially coupled to the central part of the first gear part 300.

The first gear part 300 may be rotated along with the steering column part 200. The first gear part 300 may be rotated in the same direction of the rotation direction of the steering column part 200. The first gear part 300 may include a helical gear.

The first gear part 300 may be fabricated to include a plastic material. In another embodiment, the first gear part 300 may be fabricated to include a metal material, such as steel.

The electric motor part 400 may be coupled to the housing part 100. The electric motor part 400 may generate torque by receiving power from the outside. The electric motor part 400 converts power received from the outside, such as an AC, DC, or BLDC motor, into torque, and may generate feedback in a direction in which the rotation of the steering column part 200 according to the rotation of the steering wheel is blocked.

A driver who turns the steering wheel can feel a change in a steering direction in his or her hand through the feedback that is generated by the electric motor part 400.

The electric motor part 400 may include a motor housing 410 and a motor shaft 420.

The motor housing 410 may be movably coupled to the housing part 100. Furthermore, the motor housing 410 may be moved in a radial direction thereof in the moving direction of the wheelbase variable member 500.

The motor housing 410 may be coupled to one side of the housing part 100 in the length direction thereof, in which the opening 100a is formed.

The motor housing 410 may face one side of the housing part 100 in the length direction thereof, and may cover the opening 100a of the housing part 100. The motor housing 410 may be coupled to the housing part 100, and may be disposed in a direction parallel to the length direction of the housing part 100.

The motor housing 410 may include a housing body part 411, a flange part 412, and a guide protrusion part 413.

The housing body part 411 may form a rough appearance of the motor housing 410 according to the present embodiment, and may generally support the flange part 412, the guide protrusion part 413, and the motor shaft 420.

A detailed shape of the housing body part 411 is not limited to the shape illustrated in FIG. 3, and may be variously designed and changed.

The motor shaft 420 may be coupled to the housing body part 411. The motor shaft 420 may be coupled to the housing body part 411 in a way to be axially rotatable.

The flange part 412 may be provided in the housing body part 411. The flange part 412 may be disposed to face the opening 100a of the housing part 100, which faces a direction in which the motor housing 410 is disposed.

The flange part 412 may be coupled to an edge of the housing body part 411 by bolting. The flange part 412 may be formed to have a hollow shape in which the flange part is formed in the circumferential direction of the housing body part 411. The motor shaft 420 may pass through the inside of the flange part 412.

A tap hole may be provided in the flange part 412. The tap hole may be formed through the thickness direction of the flange part 412.

The tap hole of the flange part 412 may be disposed in a plural number in the circumferential direction of the flange part 412 so that the plurality of tap holes is spaced apart from each other. At least three tap holes may be formed in the flange part 412.

The fastening member 10 may be fastened to the housing part 100 through the tap holes formed in the flange part 412. The fastening member 10 may be a bolt that is helically coupled to the housing part 100, for example.

The motor housing 410 may be fixed to the housing part 100 because the fastening member 10 is helically coupled to the tap holes formed in the housing part 100 through the tap holes of the flange part 412.

The guide protrusion part 413 may be formed in the flange part 412 in a way to protrude therefrom. The guide protrusion part 413 may extend from the flange part 412 to a direction in which the housing part 100 is disposed. The guide protrusion part 413 may be inserted into the housing part 100 through the opening 100a of the housing part 100.

The guide protrusion part 413 may be disposed in a plural number in the circumferential direction of the flange part 412 so that the plurality of guide protrusion part is spaced apart from each other. Any one of the plurality of guide protrusion parts 413 may be supported by the wheelbase variable member 500.

A movement of the guide protrusion part 413 that is not supported by the wheelbase variable member 500 may be restricted by a moving restriction part 110.

The guide protrusion part 413 may include a first guide protrusion part 413a that comes into contact with the wheelbase variable member 500 and that is supported by the wheelbase variable member 500 and a second guide protrusion part 413b that does not come into contact with the wheelbase variable member 500 and that is not supported by the wheelbase variable member 500.

A movement of the second guide protrusion part 413b may be restricted by the moving restriction part 110. A movement of the first guide protrusion part 413a may also be restricted by the moving restriction part 110.

The motor shaft 420 may be rotatably coupled to the motor housing 410. The motor shaft 420 may be accommodated within the housing body part 411 in a way to be axially rotatable.

The central axis of the motor shaft 420 may be disposed in a direction parallel to a second axial direction AX2. The second axial direction AX2 may not accord with the first axial direction AX1. The first axial direction AX1 and the second axial direction AX2 may refer to directions that are parallel to each other without being placed on the same axial line.

The central axis direction of the motor shaft 420 and the second axial direction AX2 may be disposed on the same axial line. Furthermore, the second axial direction AX2 may be the same direction as the central axis direction of the motor shaft 420.

The motor shaft 420 may be inserted into the housing part 100 through the opening 100a of the housing part 100.

The motor shaft 420 may be spaced apart from the steering column part 200 and may be disposed in parallel to the steering column part 200. The central axis of the steering column part 200 may be disposed to be spaced apart from the central axis of the motor shaft 420 in a first direction D1.

The first direction D1 may refer to the direction of the wheelbase between the central axis of the steering column part 200 and the central axis of the motor shaft 420. Furthermore, the first direction D1 may refer to a direction in which the central axis of the steering column part 200 and the central axis of the motor shaft 420, which are disposed in parallel, become close to each other and a direction in which the central axis of the steering column part 200 and the central axis of the motor shaft 420, which are disposed in parallel, become distant from each other.

A second gear part 421 that is engaged with the first gear part 300 may be provided in the motor shaft 420. The second gear part 421 may be provided on one side of the motor shaft 420, which is inserted into the housing part 100.

The second gear part 421 may be fabricated to include a metal material, such as steel. The second gear part 421 may include a helical gear. The second gear part 421 may be formed integrally with the motor shaft 420.

A moving restriction part 110 that restricts a movement of the guide protrusion part 413 may be provided in the housing part 100. The moving restriction part 110 may be placed on the side of the opening 100a of the housing part 100. The moving restriction part 110 may be depressed and formed in an inner surface of the housing part 100 so that the guide protrusion part 413 is accommodated.

The moving restriction part 110 may be disposed in a plural number in the circumferential direction of the housing part 100 so that the plurality of moving restriction part is spaced apart from each other. The moving restriction parts 110 may be disposed at locations corresponding to the plurality of guide protrusion parts 413.

A first through hole part 111 may be provided in the moving restriction part 110. The first through hole part 111 may be formed in a second direction D2 through the outer circumferential surface of the housing part 100. The second direction D2 may refer to a direction that intersects the first direction D1 at a set angle.

A screw thread that is formed on the inner circumferential surface of the housing part 100 may be provided in the first through hole part 111.

A gap G may be formed between the guide protrusion part 413 and the moving restriction part 110 so that the motor housing 410 is moved in a direction parallel to the second direction D2.

The wheelbase variable member 500 may be coupled to the housing part 100in a manner that allows it to move forward and backward. Furthermore, the wheelbase variable member 500 may be helically coupled to the inner circumferential surface of the first through hole part 111 formed in the moving restriction part 110.

The wheelbase variable member 500 may be disposed in the second direction D2. The central axis of the wheelbase variable member 500 may be disposed in a direction parallel to the second direction D2 that intersects the first direction D1 at a set angle θ.

A crossing angle θ of the second direction D2 with respect to the first direction D1 may be 10 degrees to 90 degrees. Furthermore, a tilt angle θ of the wheelbase variable member 500 toward the second direction D2 on the basis of the first direction D1 in which the central axis of the steering column part 200 and the central axis of the motor shaft 420 are connected may be 10 degrees to 90 degrees.

The crossing angle θ of the second direction D2 with respect to the first direction D1 may be set, if necessary, within the angle range of 10 degrees to 90 degrees. In an embodiment, the crossing angle θ may range from 60 degrees to 85 degrees.

The wheelbase variable member 500 may support the first guide protrusion part 413a after passing through the first through hole part 111 and coming into contact with the first guide protrusion part 413a. The wheelbase variable member 500 may be a bolt, for example.

The wheelbase variable member 500 may vary the wheelbase between the steering column part 200 and the motor shaft 420 by enabling a movement of the motor housing 410.

The wheelbase between the steering column part 200 and the motor shaft 420 may be varied in the rotation direction of the wheelbase variable member 500.

As the motor housing 410 is rotated in the second direction D2, the wheelbase between the steering column part 200 and the motor shaft 420 may be varied.

The wheelbase variable member 500 pressurizes the first guide protrusion part 413a, after the motor housing 410 is assembled with the housing part 100 by helically coupling the fastening member 10 that passes through the tap hole formed in the flange part 412 to the tap hole formed in the housing part 100 and then the wheelbase variable member 500 that is helically coupled to the first through hole part 111 formed in the housing part 100 and that supports the first guide protrusion part 413a of the guide protrusion part 413 is rotated in one direction.

The first guide protrusion part 413a pressurized by the wheelbase variable member 500 and the second guide protrusion part 413b are guided by the moving restriction part 110 and moved in the second direction D2 in which the steering column part 200 is disposed. Accordingly, the wheelbase between the central axis of the steering column part 200 and the central axis of the motor shaft 420 is adjusted. As a result, backlash between the first gear part 300 and the second gear part 421 can be adjusted.

As the motor housing 410 is moved in a direction opposite to the second direction D2 or the second direction D2, the wheelbase between the steering column part 200 and the motor shaft 420 can be varied.

When the wheelbase variable member 500 that pressurizes the first guide protrusion part 413 is rotated in a reverse direction, the first guide protrusion part 413a and the second guide protrusion part 413b may be guided by the moving restriction part 110 and moved in a direction opposite to the direction in which the steering column part 200 is disposed. Accordingly, the wheelbase between the central axis of the steering column part 200 and the central axis of the motor shaft 420 can be adjusted. As a result, backlash between the first gear part 300 and the second gear part 421 can be adjusted.

A second through hole part 112 may be further provided in the housing part 100 according to the present embodiment. The second through hole part 112 may be formed on an outer surface (i.e., a lower surface in FIG. 6) of the housing part 100 in the first direction D1 in a way to penetrate the outer surface. A linear gauge may be mounted on the second through hole part 112 in order to measure a movement of the guide protrusion part 413, that is, movement of the second guide protrusion part 413b in the second direction D2.

The steering feedback actuator 1 according to an embodiment of the present disclosure can precisely adjust backlash between the first gear part 300 and the second gear part 421 because the steering feedback actuator can adjust the wheelbase between the steering column part 200 that includes the first gear part 300 and the motor shaft 420 that includes the second gear part 421 engaged with the first gear part 300 and that is disposed in parallel to the steering column part 200.

The steering feedback actuator 1 according to an embodiment of the present disclosure can reduce noise that is generated by backlash between the first gear part 300 and the second gear part 421 because the first gear part 300 includes a metal material and the second gear part 421 engaged with the first gear part 300 includes a plastic material.

Although exemplary embodiments of the disclosure have been disclosed for illustrative purposes, those skilled in the art will appreciate that various modifications, additions and substitutions are possible, without departing from the scope and spirit of the disclosure as defined in the accompanying claims. Thus, the true technical scope of the disclosure should be defined by the following claims.

## Claims

1. A steering feedback actuator comprising:
a housing part;
a steering column part rotatably accommodated in the housing part;
a first gear part coupled to the steering column part and rotated along with the steering column part;
an electric motor part comprising a motor housing that is movably coupled to the housing part and that covers an opening of the housing part and a motor shaft that is rotatably coupled to the motor housing and that comprises a second gear part engaged with the first gear part; and
a wheelbase variable member coupled to the housing part in a way to be capable of advancing and retreating, coupled to the motor housing in a way to come into contact with the motor housing, and configured to vary a wheelbase between the steering column part and the motor shaft by moving the motor housing.

2. The steering feedback actuator of claim 1, wherein:
a central axis of the steering column part is disposed in a direction parallel to a first axial direction, and
a central axis of the motor shaft is disposed in a direction parallel to a second axial direction that does not accord with the first axial direction.

3. The steering feedback actuator of claim 2, wherein the central axis of the steering column part is disposed to be spaced apart from the central axis of the motor shaft in a first direction.

4. The steering feedback actuator of claim 3, wherein a central axis of the wheelbase variable member is disposed in a direction parallel to a second direction that intersects the first direction at a set angle.

5. The steering feedback actuator of claim 4, wherein a crossing angle of the second direction with respect to the first direction is 10 degrees to 90 degrees.

6. The steering feedback actuator of any one of claims 1 to 5, wherein the motor housing comprises:
a housing body part coupled to the motor shaft;
a flange part that is coupled to the housing body part and through which the motor shaft passes; and
a guide protrusion part that is formed in the flange part in a way to protrude from the guide protrusion part and inserted into the housing part and that is capable of supporting the wheelbase variable member.

7. The steering feedback actuator of claim 6, wherein the guide protrusion part is disposed in a plural number in a circumferential direction of the flange part so that the plurality of guide protrusion part is spaced apart from each other.

8. The steering feedback actuator of claim 6 or 7, wherein the housing part comprises a moving restriction part depressed and formed in an inner surface of the housing part so that the guide protrusion part is accommodated and configured to limit a movement of the guide protrusion part.

9. The steering feedback actuator of claim 8, wherein the moving restriction part is disposed at locations corresponding to the plurality of guide protrusion parts.

10. The steering feedback actuator of any one of claims 1 to 9, wherein:
the first gear part comprises a plastic material or a metal material, and
the second gear part comprises a plastic material.
